# EUROPEAN PATENT SPECIFICATION

(11) **EP 0 619 358 B1**
(45) Date of publication and mention of the grant of the patent: **02.06.1999**
(21) Application number: 94110286.5
(22) Date of filing: 03.03.1993
(51) Int. Cl.: C09K 9/02, G03C 1/73

(54) **Photochromic composition**
Photokromische Zusammensetzung
Composition photochrome

(30) Priority: 03.03.1992 JP 45813/92
(43) Date of publication of application: 12.10.1994
(62) Divisional of application: 93301590.1
(73) Proprietor: TOKUYAMA CORPORATION, Tokuyama-shi Yamaguchi-ken (JP)
(72) Inventor: Kobayakawa, Takashi, Tokuyama Corporation, Tokuyama-shi, Yamuguchi-ken (JP); Imura, Satoshi, Tokuyama Corporation, Tokuyama-shi, Yamuguchi-ken (JP); Itonage, Kazumasa, Tokuyama Corporation, Tokuyama-shi, Yamuguchi-ken (JP); Kuramota, Kazuhiko, Tokuyama Corporation, Tokuyama-shi, Yamuguchi-ken (JP)
(74) Representative: Cresswell, Thomas Anthony

(56) References cited:
- DATABASE WPI Section Ch, Week 2, Derwent Publications Ltd., London, GB; Class A89, AN 92-012341 & JP-A-3 261 945 (TORAY) 21 November 1991

## Description

This invention relates to a photochromic composition having an excellent durable photochromic action.

Photochromism is a phenomenon, which has attracted attention for the past several years, in which light containing ultraviolet rays such as sunlight or light from a mercury lamp is irradiated onto a compound, its colour rapidly changes, and when the irradiation is stopped and the compound is placed in a dark place, its colour reversibly returns to the original colour. Compounds having this property are called photochromic compounds. Photochromic compounds having various structures have been synthesized. However, these photochromic compounds have the disadvantage of poor reversible durability.

The present inventors have studied a series of photochromic compounds, and succeeded in synthesizing novel fulgide compounds and novel chromene compounds. They have found that these compounds have excellent photochromic action. For example, fulgide compounds are disclosed in US-A-4,882,438, US-A-4,960,678 and US-A-5,130,058 and chromene compounds are disclosed in US-A-5,106,998.

These photochromic compounds have excellent reversible durability, but when such a compound is mixed with a radical-polymerizable monomer and the mixture is polymerized, the resulting photochromic resin being used for various utilities, a better reversible durability of the photochromic action is sought.

The present invention seeks to provide a photochromic composition having a deep colour-forming density and a fast colour fading speed, and a photochromic resin having good photochromism, transparency and surface hardness.

We have continued to assiduously investigate the production of a photochromic resin typified by a photochromic lens by mixing a photochromic compound with a radical-polymerizable monomer and polymerizing the mixture. As a result, we have found that by using a particular photochromic compound conjointly with a particular compound having at least one epoxy group in the molecule, the durability of the photochromic action of the photochromic compound is increased.

The present invention provides a photochromic composition comprising:
(A) 100 parts by weight of a compound having at least one epoxy group per molecule of formula (1);
(B) 0.0001 to 10,000 parts by weight of a photochromic compound comprising a fulgide compound of formula (2);
(C) 1 to 99,999 parts by weight of a monomer of formula (3); and
(D) 1 to 99,999 parts by weight of a monomer of formula (4);
the total amount of (C) and (D) being from 10 to 100,000 parts by weight;
the compounds of formulae (1) to (4) being defined as follows: 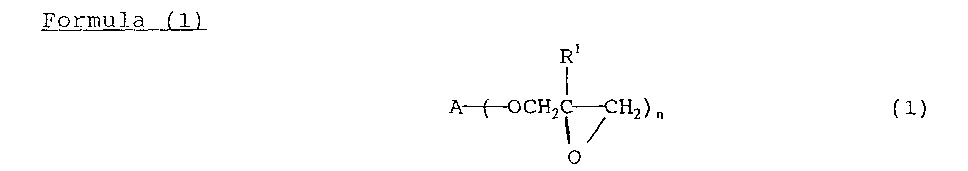 wherein:
R¹ is hydrogen or a methyl group;
n is 1 or 2; and
when n is 1, A is an alkyl group having 2 to 20 carbon atoms which may be unsubstituted or substituted by a hydroxyl group, a group of formula -R(̵OR 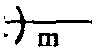 OH (in which R is an alkylene group having 2 to 4 carbon atoms and m is an integer of 1 to 20), a cycloalkyl group having 6 or 7 carbon atoms which may be unsubstituted or substituted by a hydroxyl group, a phenyl group which may be unsubstituted or substituted by a hydroxyl group, or a benzoyl group which may be unsubstituted or substituted by a carboxyl group; or
when n is 2, A is an alkylene group having 2 to 20 carbon atoms which may be unsubstituted or substituted by a hydroxyl group, a group of formula -R(̵OR 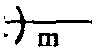 (in which R is an alkylene group having 2 to 4 carbon atoms and m is an integer of 1 to 20), a cycloalkylene group which may be unsubstituted or substituted by a hydroxyl group, a phenylene group which may be unsubstituted or substituted by a hydroxyl group, a phthaloyl group, an isophthaloyl group, a terephthaloyl group or a group of formula: 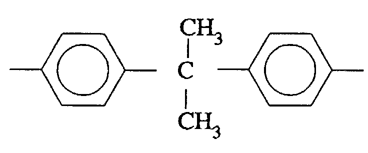 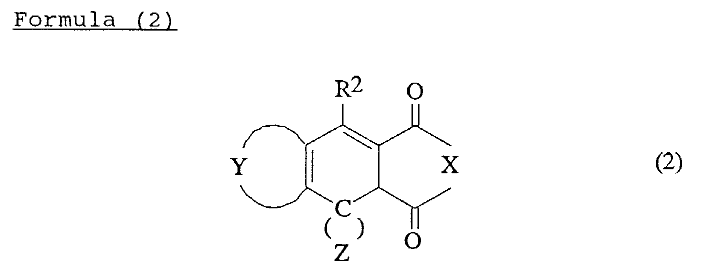
wherein 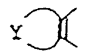 is a benzene ring or a divalent aromatic hydrocarbon group consisting of 2 or 3 fused benzene rings or a divalent unsaturated heterocyclic group comprising a 5- or 7-membered ring including 1 or 2 oxygen, nitrogen or sulphur atoms in the ring and optionally containing a fused benzene ring; any of which may have a substituent selected from halogen atoms, alkyl groups having 1 to 4 carbon atoms, alkoxy groups having 1 to 4 carbon atoms, aryl groups having 6 to 10 carbon atoms, alkoxyaryl groups having 7 to 14 carbon atoms (aryl groups having 6 to 10 carbon atoms substituted by alkoxy groups having 1 to 4 carbon atoms), an amino group, nitro group or cyano group;
R² is an alkyl group having 1 to 4 carbon atoms, an aryl group having 6 to 10 carbon atoms, or a monovalent heterocyclic group comprising a 5 to 7 membered ring including 1 or 2 oxygen atoms, nitrogen atoms or sulphur atoms as ring members and optionally containing a fused benzene ring; 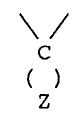 is a norbornylidene group or an adamantylidene group; and
X is an oxygen atom, a group 〉N-R³, a group 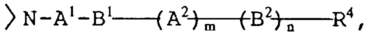 a group 〉N-A³-A⁴ or a group 〉N-A³-R⁵ in which R³ is a hydrogen atom, an alkyl group having 1 to 4 carbon atoms or an aryl group having 6 to 10 carbon atoms, A¹, A² or A³, which are the same or different, are each an alkylene group having 1 to 4 carbon atoms, an alkylidene group having 2 to 4 carbon atoms, a cycloalkylene group or a dimethyl-cyclohexane-diyl group, B¹ and B², which are the same or different, are each -O-, 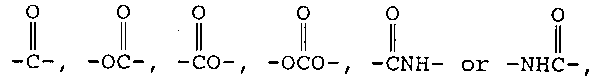 and m and n are independently 0 or 1, with the proviso that when m is 0, n is 0, R⁴ is an alkyl group having 1 to 4 carbon atoms, a naphthyl group or a naphthylalkyl group having 11 to 14 carbon atoms, A⁴ is a naphthyl group, and R⁵ is a halogen atom, a cyano group or a nitro group; 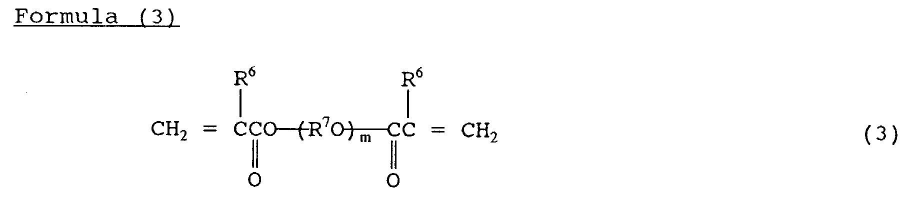 wherein:
R⁶ is hydrogen or a methyl group;
R⁷ is an alkylene group having 1 to 4 carbon atoms, or a group of formula 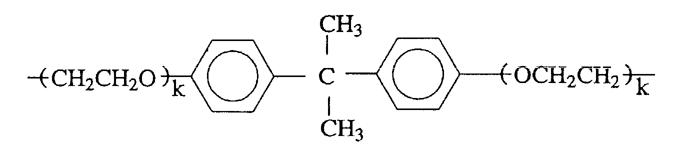
in which k is 0 or 1; and
m is an integer of 2 to 20; 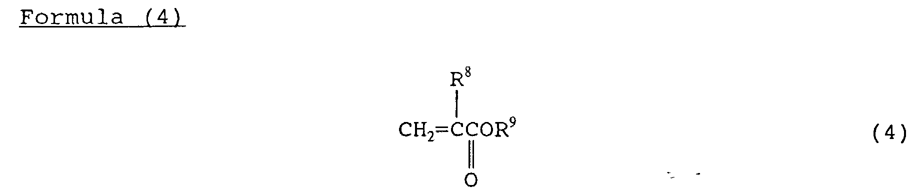
wherein:
R⁸ is hydrogen or a methyl group; and
R⁹ is an alkyl group having 1 to 4 carbon atoms which may be unsubstituted or substituted by a hydroxyl group, an aryl group containing 6 to 10 carbon atoms which may be unsubstituted or substituted by a halogen atom, or an aralkyl group containing 7 to 10 carbon atoms which may be unsubstituted or substituted by a halogen atom.

Examples of the compound of formula (I) are ethylene glycol glycidyl ether, propylene glycol glycidyl ether, glycerol polyglycidyl ether, diglycerol polyglycidyl ether, sorbitol polyglycidyl ether, butyl glycidyl ether, phenyl glycidyl ether, polyethylene glycol diglycidyl ether, polypropylene glycol diglycidyl ether, neopentyl glycol diglycidyl ether, 1,6-hexane diol diglycidyl ether, bisphenol A propylene oxide adduct, diglycidyl ester of terephthalic acid, spiroglycol diglycidyl ether and hydroquinone diglycidyl ether.

The photochromic component (B) comprises a fulgide compound of formula (2), optionally together with a chromene compound. These fulgide compounds and chromene compounds are well known. Those disclosed in US-A-4,882,438, US-A-4,960,678, US-A-5,130,058 and US-A-5,106,998 are preferably used.

The fulgide compounds have a greater ability to increase the durability of the photochromic property than other compounds.

Examples of the divalent aromatic hydrocarbon groups represented by 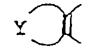 in formula (2) are groups having 6 to 14 carbon atoms derived from, for example, a benzene ring, a naphthalene ring, a phenanthrene ring or an anthracene ring. Examples of the divalent unsaturated heterocyclic group represented by 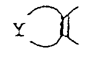 in formula (2) are groups having 4 to 9 carbon atoms derived from, for example, a furan ring, a benzofuran ring, a pyridine ring, a quinoline ring, an isoquinoline ring, a pyrrole ring, a thiophene ring or a benzothiophene ring. Possible substituents on the group represented by 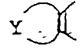 are halogen atoms such as chlorine, bromine and iodine, alkyl groups having 1 to 4 carbon atoms such as a methyl group and an ethyl group, alkoxy groups having 1 to 4 carbon atoms such as a methoxy group and an ethoxy group, aryl groups having 6 to 10 carbon atoms such as a phenyl group, a tolyl group and a xylyl group, alkoxyaryl groups having 7 to 14 carbon atoms (aryl groups having 6 to 10 carbon atoms substituted by alkoxy groups having 1 to 4 carbon atoms), an amino group, nitro group or cyano group.

Examples of the alkylene groups represented by A¹, A² and A³ are a methylene group, an ethylene group, a propylene group, a trimethylene group and a tetramethylene group. Examples of the alkylidene groups are an ethylidene group, a propylidene group and an isopropylidene group. An example of the cycloalkylene group is a cyclohexylene group.

Preferred naphthylalkyl groups represented by R⁴ are a naphtylmethyl group and a naphthylethyl group.

Preferred fulgide compounds of formula (2), in view of the durability of the photochromic action, are those wherein R² is an alkyl group, X is >N-R in which R is a cyano-alkyl group having 1 to 4 carbon atoms, a nitro-alkyl group having l to 4 carbon atoms or an alkoxycarbonyl-alkyl group having 3 to 9 carbon atoms (containing an alkoxy group containing 1 to 4 carbon atoms and an alkylene group having 1 to 4 carbon atoms), 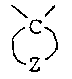 is an adamantylidene group, and 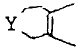 is a heterocyclic group, especially a group derived from a thiophene ring, which may be substituted by an aryl group having 6 to 10 carbon atoms or an alkoxyaryl group having 7 to 14 carbon atoms (an aryl group having 6 to 10 carbon atoms which is substituted by an alkoxy group having 1 to 4 carbon atoms).

When the photochromic compound is used as an eyeglass lens, a colour such as grey or brown is preferred. Since a single such photochromic compound cannot give such a colour, mixing two or more photochromic compounds may be adopted. The above-mentioned fulgide compound is generally coloured orange to blue. When it is mixed with a chromene compound which is coloured yellow to orange, an intermediate color such as grey or brown may be obtained. Since the aforesaid fulgide compound has a poor durability of photochromic properties as compared with a chromene compound, changes may occur in colour over time. For this reason, a mixed colour of the fulgide compound and the chromene compound changes over time. However, in accordance with this invention, the durability of photochromism of the fulgide compound is made close to the durability of the chromene compound, and divergence in colour over time can be minimized.

The chromene compound preferably used in admixture with the fulgide compound to obtain an intermediate colour is of formula (5): 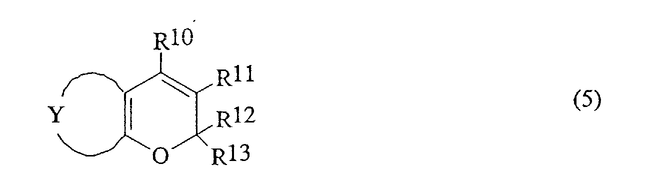 wherein: R¹⁰, R¹¹, R¹² and R¹³ are the same or different and each is hydrogen, alkyl, aryl, substituted amino or a saturated heterocyclic group or R¹⁰ and R¹¹ are as defined above and R¹² and R¹³ together with the carbon atom to which they are bound form a ring, and the group 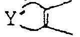 is an aromatic hydrocarbon group or an unsaturated heterocyclic group optionally substituted by alkyl of 1 to 20 carbon atoms and/or alkoxy of 1 to 20 carbon atoms.

Examples of the alkyl and aryl groups represented by R¹⁰, R¹¹, R¹² and R¹³ are the alkyl and aryl groups described above with regard to formula (2). Examples of the substituted amino group are amino groups which have at least one hydrogen atom substituted by the aforesaid alkyl or aryl group. Examples of the saturated heterocyclic group include monovalent groups derived from 5 or 6-membered rings containing 1 or 2 ring-constituting atoms such as nitrogen atoms, oxygen atoms and sulfur atoms, such as a pyrrolidine group, an imidazolidine ring, a piperidine ring, a piperazine ring and a morphorine ring.

Examples of the ring formed by R¹² and R¹³ are a norbornylidene group and a bicyclo (3,3,1,)9-nonylidene group.

The aromatic hydrocarbon group or the unsaturated heterocyclic group represented by 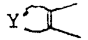 may be the same as those shown in formula (2). Substituents of these groups are not particularly limited. Examples of the substituents include halogen atoms such as chlorine, bromine and iodine, alkyl groups having 1 to 20 carbon atoms such as a methyl group and an ethyl group, alkoxy groups having 1 to 20 carbon atoms such as a methoxy group and an ethoxy group, aryl groups having 6 to 10 carbon atoms such as a phenyl group, a tolyl group and a xylyl group, amino groups, a nitro group, and a cyano group.

Examples of the chromene compounds preferably used in this invention are those in which R¹⁰ and R¹¹ are both hydrogen, R¹² and R¹³ are the same or different and each is alkyl of 1 to 4 carbon atoms, or together with the carbon atom to which they are bound form a bicyclo(3,3,1)9-nonylidene group or a norbornylidene group, and 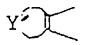 is a naphthalene ring optionally substituted by alkyl of 1 to 20 carbon atoms and/or alkoxy of 1 to 20 carbon atoms.

The fulgide compounds and the chromene compounds that are preferably used are:

Fulgide Compounds
1) N-cyanomethyl-6,7-dihydro-4-methyl-2-phenylspiro(5,6-benzo(b)thiophenedicarboximide-7,2-tricyclo(3,3,1,1^{3.7})decane
2) N-cyanomethyl-6,7-dihydro-2-(p-methoxyphenyl)-4-methylspiro(5,6-benzo(b)thiophene/dicarboximide-7,2-tricyclo(3,3,1,1^{3.7})decane
3) N-cyanomethyl-6,7-dihydro-4-methyl-spiro(5,6-benzo(b)thiophenedicarboximide-7,2-tricyclo(3,3,1,1^{3.7})decane
4) 6,7-Dihydro-N-methoxycarbonylmethyl-4-methyl-2-phenylspiro(5,6-benzo(b)thiophene/dicarboximide-7,2-tricyclo(3,3,1,1^{3.7})decane
5) 6,7-Dihydro-4-methyl-2-(p-methylphenyl)-N-nitromethylspiro(5,6-benzo(b)thiophenedicarboximide-7,2-tricyclo(3,3,1,1^{3.7})decane

Chromene Compounds
1) Spiro(norbornane-2,2'-(2H)benzo(h)-chromene)
2) Spiro(bicyclo(3,3,1)nonane-9,2'-(2H)benzo(f)chromene)
3) 7'-methoxyspiro(bicyclo(3,3,1)nonane-9,2'-(2H)-benzo(f)chromene)
4) 7'-methoxyspiro(norbornane-2,2'-(2H)-benzo(f)chromene)
5) 2,2-Dimethyl-7-octoxy(2H)benzo(h)-chromene

In the photochromic composition of this invention, the durability of the photochromic action can be fully increased by the presence of even a slight amount of the compound of formula (1). Accordingly, the amounts to be compounded of the compound of formula (1) and the photochromic component may vary within wide ranges. However, if the amount of the photochromic compound is too small based on the amount of the compound of formula (1), a good durability of the photochromic property cannot be obtained. If it is too large, coagulation of the photochromic compound occurs, and the durability of the photochromic property abruptly decreases. Accordingly, the photochromic component is used in an amount of 0.0001 to 10,000 parts by weight, preferably 0.1 to 1,000 parts by weight, per 100 parts by weight of the compound of formula (1).

In the production of an eyeglass lens from the photochromic composition of this invention, radical-polymerizable monomers of formulae (3) and (4) are included, and the mixture may be polymerized.

Examples of the radical-polymerizable monomers of formula (3) or (4) are acrylates and methacrylates such as methyl acrylate, methyl methacrylate, benzyl methacrylate, phenyl methacrylate, tribromophenyl methacrylate, ethylene glycol diacrylate, diethylene glycol dimethacrylate, triethylene glycol dimethacrylate, tetraethylene glycol dimethacrylate, 2-hydroxyethyl methacrylate, bisphenol A dimethacrylate, 2,2-bis(4-methacryloyloxyethoxyphenyl)propane. These monomers may be used as a mixture of at least two of them.

The amount of the radical-polymerizable monomer, containing compounds of formula (3) and (4), depends upon the colour-forming density of the photochromic resin obtained by polymerization but is 10 to 100,000 parts by weight, preferably 100 to 10,000 parts by weight, per 100 parts by weight of the compound of formula (1).

By using a combination of the compounds of formulae (3) and (4) as the radical-polymerizable monomer, a deep colour-forming density and a fast fading speed of the photochromic compound can be obtained. The use of a combination of these compounds (3) and (4) provides photochromic resins having properties such as good transparency, surface hardness and heat resistance.

Examples of the alkylene group having 1 to 4 carbon atoms represented by R⁷ in the formula (3) are a methylene group, an ethylene group, a propylene group, a butylene group, a trimethylene group, and a tetramethylene group. Examples of the alkyl groups having 1 to 4 carbon atoms which may be substituted by a hydroxyl group represented by R⁹ in formula (4) are a methyl group, an ethyl group, a propyl group, a butyl group, a hydroxyethyl group and a hydroxypropyl group. Examples of the aryl groups having 6 to 10 carbon atoms which may be substituted by a halogen atom represented by R⁹ in formula (4) are a phenyl group, a naphthyl group, a chlorophenyl group, a bromophenyl group, a trichlorophenyl group and a tribromophenyl group. Example of the aralkyl groups having 7 to 10 carbon atoms which may be substituted by a halogen atom represented by R⁹; formula (4) are a benzyl group, a phenethyl group, a chlorobenzyl group, a bromobenzyl group, a trichlorobenzyl group and a tribromobenzyl group.

From the viewpoint of photochromic property and other properties, the amounts of the monomers of formulae (3) and (4) are each 1 to 99,999 parts by weight per 100 parts by weight of the compound of formula (1). It is preferred to use 50 to 9,950 parts by weight of the monomer of formula (3) and 50 to 9,950 parts by weight of the monomer of formula (4). The total amount of the monomer of formula (3) and the monomer of formula (4) is preferably 100 to 10,000 parts by weight.

A method of obtaining a polymer from the photochromic composition of this invention is not particularly limited; any known radical polymerization method may be used. Polymerization initiation means may be performed using various radical polymerization initiators such as peroxides or azo compounds, or by the irradiation of ultraviolet rays, α-rays, β-rays, and γ-rays, or by both. A typical polymerization method comprises pouring the photochromic composition of the invention containing a radical polymerization initiator and,if further required, a radical-polymerizable monomer between molds maintained by an elastomer gasket or a spacer, polymerizing the composition in a heating furnace, and then taking out the molds to perform cast molding.

The radical polymerization initiator is not particularly limited; any known one may be used. Examples of typical radical polymerization initiators are diacyl peroxides such as benzoyl peroxide, p-chlorobenzoyl peroxide, decanoyl peroxide, lauloyl peroxide and acetyl peroxide; peroxy esters such as t-butyl peroxy-2-ethylhexanate, t-butyl peroxyneodecanate, cumyl peroxyneodecanate and t-butyl peroxybenzoate; percarbonates such as diisopropyl peroxydicarbonate and di-sec-butyl peroxydicarbonate; and azo compounds such as azobisisobutyronitrile.

The amount of the radical-polymerization initiator used differs depending upon the polymerization conditions and the type of the initiator and the composition of the monomers. Generally, it is 0.001 to 10 parts by weight, preferably 0.01 to 5 parts by weight, per 100 parts by weight of the monomer component of the photochromic composition.

Of the polymerization conditions, the temperature affects the properties of the resulting photochromic resin. The temperature conditions are affected by the amount or the type of the initiator and the type of the monomers, and cannot be generally limited. Generally, the polymerization is initiated at a relatively low temperature, the temperature is slowly raised, and at the end of polymerization, the composition is hardened at a high temperature (two-step polymerization of the tapered type). The polymerization time varies by various factors as the polymerization temperature does. Accordingly, the optimal time may be determined in advance according to these conditions. Generally, such conditions may preferably be selected so that the polymerization may be completed within 2 to 40 hours.

In the above polymerization, various stabilizers such as a mold releasing agent, an ultraviolet absorber, an ultraviolet stabilizer, an oxidation preventing agent, a coloration inhibiting agent, an antistatic agent, a fluorescent dye, a dye, a pigment, a perfume, and other additives may be used as required.

The mixed use of the ultraviolet stabilizer in the photochromic composition of this invention can further preferably increase the durability of the photochromic compound. In particular, since the fulgide compound has a large effect of increasing the durability by the addition of the ultraviolet stabilizer, when the fulgide compound is used as a mixture with the chromene compound, the change of the intermediate colour of these compounds can well be prevented over time.

Examples of the ultraviolet stabilizer are preferably hindered amine photostabilizers, hindered phenol photostabilizers and sulfur-type antioxidants. Especially preferably used are hindered amine photostabilizers having a hindered amine structure in the molecule. Examples of such ultraviolet stabilizers are:

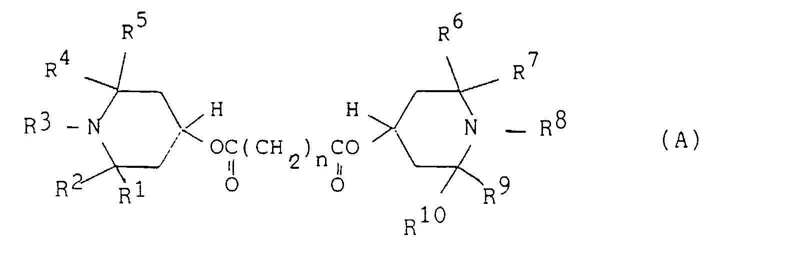

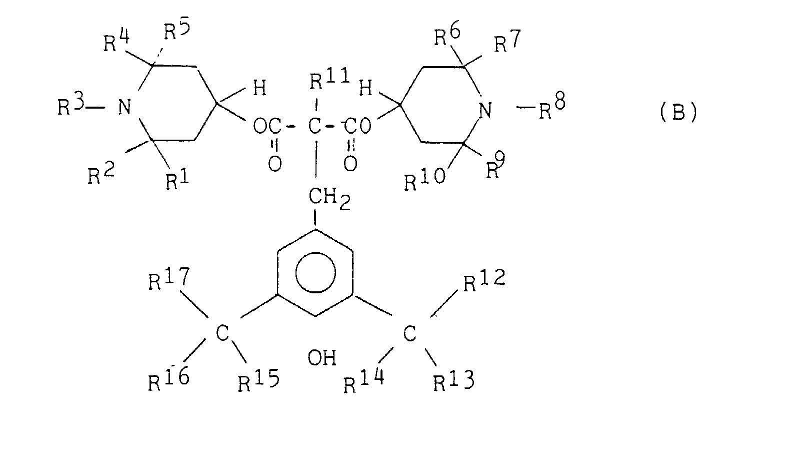

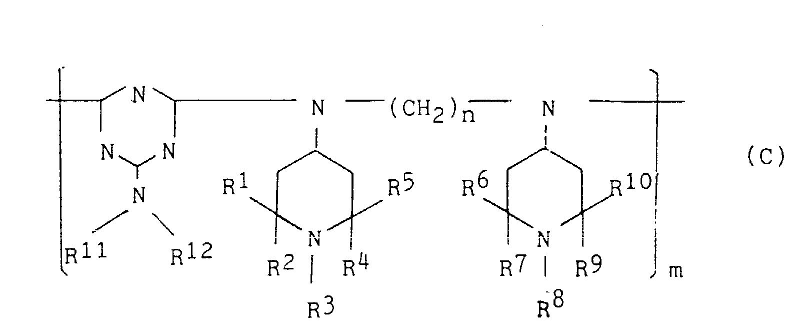

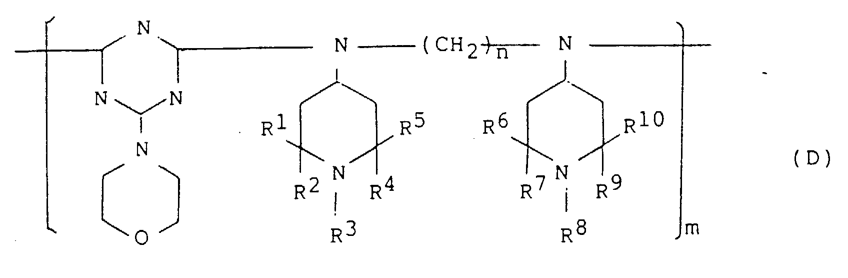

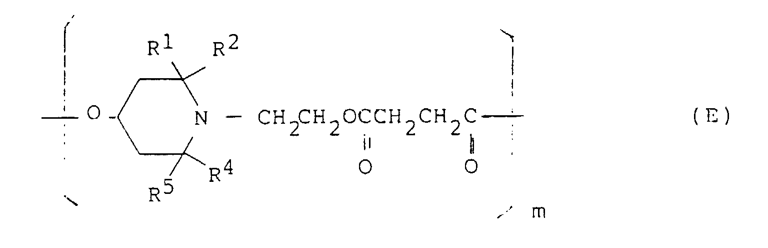

(C₂₆H₅₂N₄)ₘ (F)

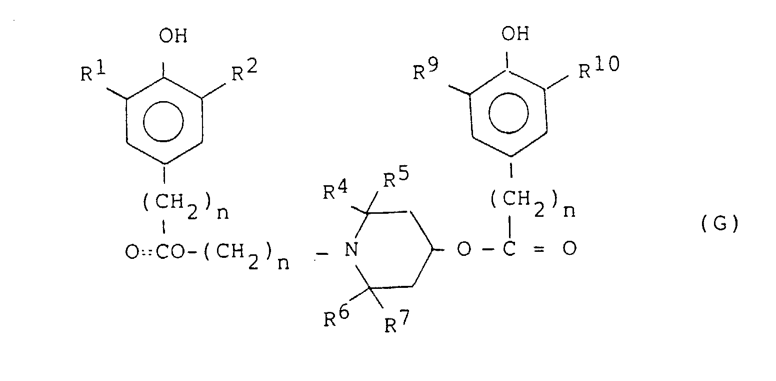

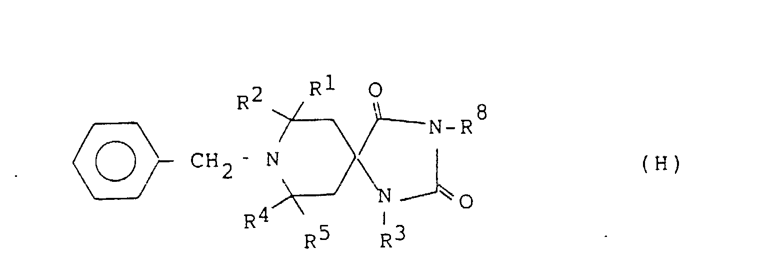

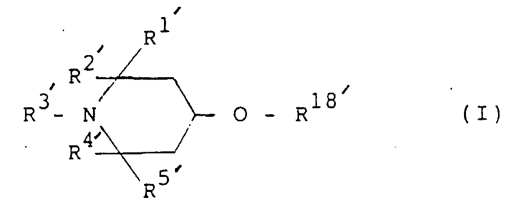

In formulae (A), (B), (C), (D), (E), (F), (G), (H), and (I), R^{1'}, R^{2'}, R^{4'}, R^{5'}, R^{6'}, R^{7'}, R^{9'}, R^{10'}, R^{11'}, R^{12'}, R^{13'}, R^{14'}, R^{15'}, R^{16'} and R^{17'} are alkyl groups, R^{3'} and R^{8'} are hydrogen or an alkyl group, R^{18'} is a benzoyl group, an acryloyl group or a methacryloyl group, and m and n are positive integers.

In formulae (A), (B), (C), (D), (E), (F), (G), (H) and (I), the numbers of carbon atoms in the alkyl groups are not particularly restricted. Generally, for the reason of ease of obtaining these compounds, the number of carbon atoms is preferably 1 to 12.

Examples of the hindered amine photostabilizers are Sumisorb LS-2000 and LS-2001 (tradenames) made by Sumitomo Chemical Co., Ltd.

The amount of the ultraviolet stabilizer is not particularly restricted. Usually, it is 0.01 to 10,000 parts by weight, especially 1 to 1,000 parts by weight, per 100 parts by weight of the compound of formula (1).

When a fulgide compound and a chromene compound are used conjointly, the addition of a phosphite ester compound can further restrain changes over time of the mixed colour of these compounds.
Accordingly, when the fulgide compound and the chromene compound are conjointly used, the joint use of both the ultraviolet stabilizer and the phosphite ester compound in the above mixed system is the most preferred embodiment.

The phosphite ester compound may be any known compound which is used in various plastics. In the present invention, to minimize changes of the colour of the mixed colour of the fulgide compound and the chromene compound and to prevent yellowing caused by deterioration by the fulgide compound, preferred phosphite ester compounds are:

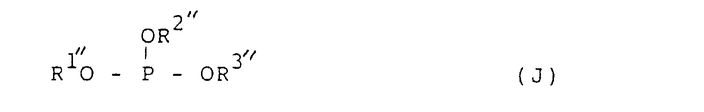

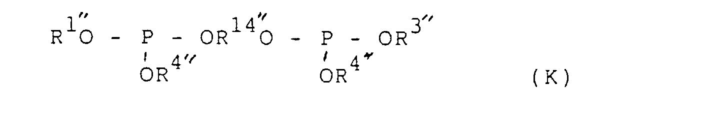

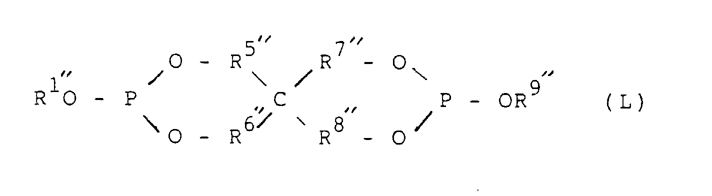

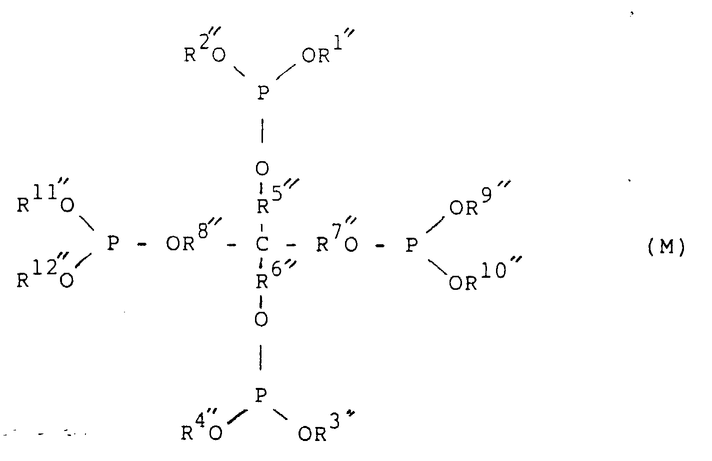

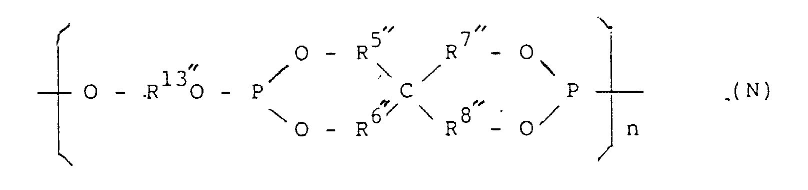

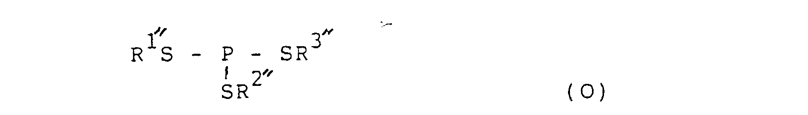

In formulae (J), (K), (L), (M), (N) and (O), R^{1"}, R^{2"}, R^{3"}, R^{4"}, R^{9"}, R^{10"}, R^{11"} and R^{12"} are the same or different, and each represents hydrogen, an aliphatic hydrocarbon group or an aromatic hydrocarbon group, R^{5"}, R^{6"}, R^{7"}, R^{8"} and R^{13"} are the same or different and each represents an alkylene group, R^{14"} is an alkylene group or a group of formula 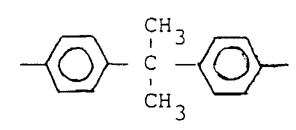 and n is a positive integer.

In formulae (J) to (O), examples of the aliphatic hydrocarbon group are straight-chain, branched or cyclic alkyl groups having 9 to 18 carbon atoms, such as a nonyl group, a decyl group, an undecyl group, a dodecyl group, a tridecyl group, a tetradecyl group, a pentadecyl group, a hexadecyl group, a heptadecyl group and an octadecyl group. Examples of the aromatic hydrocarbon group are aryl groups having 6 to 15 carbon atoms such as a phenyl group, a tolyl group, a xylyl group, a t-butylphenyl group, or a 2,6-di-t-butyl-4-methylphenyl group. A methylene group is preferred as the alkylene group.

The amount of the phosphite ester compound is 0.01 to 10,000 parts by weight, preferably 1 to 1,000 parts by weight, per 100 parts by weight of the compound of formula (1).

The photochromic resin obtained by the above-mentioned method may be treated by the following methods according to its use. It may be used in a processing such as dyeing using a dyestuff such as a disperse dyestuff, coating with a hard coating agent containing a silane coupling agent or with a hard coating agent having a sol of silicon, zirconium, antimony, aluminum, tin, or tungsten as a main component, evaporation with a thin coating of a metal oxide such as SiO₂, TiO₂, or ZrO₂, reflection-preventing treatment by the coating of a thin film of an organic polymer, and antistatic treatment, and secondary treatments.

By polymerizing the photochromic composition of this invention a photochromic resin having an excellent durability of photochromic action can be obtained.

The resins obtained from the photochromic compositions of this invention are useful as organic glasses having a photochromic property. They can be used, for example, as photochromic lenses.

The following Example further illustrates the present invention.

The compounds used in the Example are:

Compounds having at least one epoxy group in the molecule (compound of formula (1))
A : ethyleneglycolglycidylether
B : propylene glycolglycidylether
C : terephthalate diglycidylester
D : hydroquinonediglycidylether
E : butylglycidylether
F : 1,6-hexanedioldiglycidylether

Radical-polymerizable monomer
A: triethylene glycoldimethacrylate (compound of formula (3))
B: tetraethyleneglycoldimethacrylate (compound of formula (3))
C: 2-hydroxyethylmethacrylate (compound of formula (4))
D: benzyl methacrylate (compound of formula (4))

Fulgide compounds (compound of formula (2))
A: N-cyanomethyl-6,7-dihydro-4-methyl-2-phenylspiro(5,6-benzo(b)thiophenedicarboximide-7,2-tricyclo(3,3,1,1^{3.7})decane)
B; N-cyanomethyl-6,7-dihydro-2-(p-methoxyphenyl)-4-methylspiro-(5,6-benzo(b)thiophenedicarboximide-7,2-tricyclo(3,3,1,1^{3.7})decane)
C: N-cyanomethyl-6,7-dihydro-4-methylspiro-(5,6-benzo(b)-thiophenedicarboximide-7,2-tricyclo(3,3,1,1^{3.7})decane)
D; 6,7-dihydro-N-methoxycarbonylmethyl-4-methyl-2-phenylspriro(5,6-benzo(b)-thiophenedicarboximide-7,2-tricyclo-(3,3,1,1^{3.7})decane)
E: 6,7-dihydro-4-methyl-2-(p-methylphenyl)-N-nitromethylspiro(5,6-benzo(b)thiophenedicarboximide-7,2-tricyclo(3,3,1,1^{3.7})decane)

Chromene compounds
A: spiro(norbornane-2,2'-(2H)benzo(h)-chromene)
B: spiro(bicyclo(3,3,1)nonane-9,2'-(2H)benzo(f)chromene)
C: 7'-methoxyspiro(bicyclo(3,3,1)nonane-9,2'-(2H)benzo(f)chromene)
D: 7'-methoxyspiro(norbornane-2,2'-(2H)-benzo(f)chromene)
E: 2,2-dimethyl-7-octoxy(2H)benzo(h)-chromene

Hindered amine photostabilizers
A: Sanol LS-2626 (trademark: Sankyo Co., Ltd) 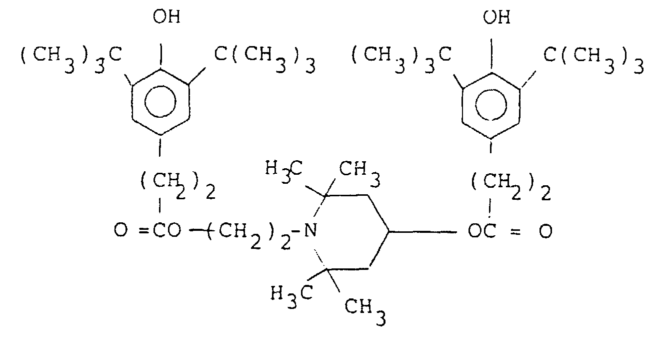
B: Sanol LS-744 (tradename: Sankyo Co., Ltd.) 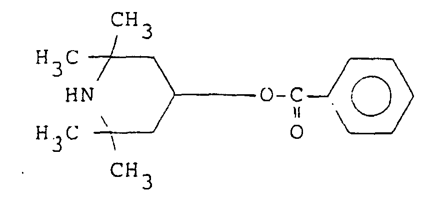
C: MARK LA-82 (treadename: Asahi Denka Co., Ltd.) 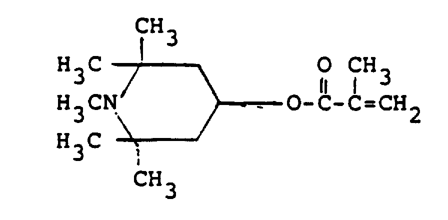
D: MARK LA-87 (tradename: Asahi Denka Co., Ltd.)

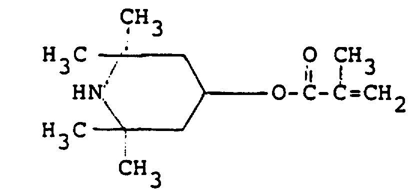

Phosphite ester compounds
A: 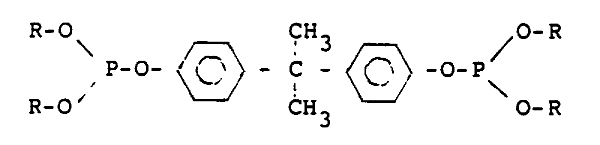 (R is an alkyl group having 9 to 18 carbon atoms)
B: P -(O-C₁₀H₂₁)₃
C: 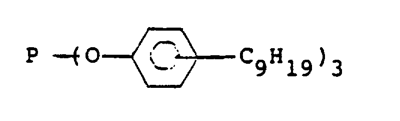
D: 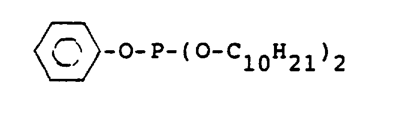
E:

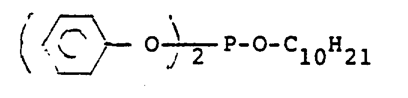

### Example

The compound having at least one epoxy group in the molecule shown in Table 1, the radical-polymerizable monomer, 0.5 parts by weight of A: N-cyanomethyl-6,7-dihydro-4-methyl-2-phenylspiro-(5,6-benzo(b)thiophenedicarboximide-7,2-tricyclo-(3,3,1,1^{3.7})decane) as the fulgide compound, and 0.5 part by weight of t-butylperoxy-2-ethylhexanate as a radical-polymerization initiator were well mixed. The mixed liquid was poured into a mold cavity composed of a glass plate and a gasket of an ethylene-vinyl acetate to perform a casting polymerization. The polymerization was carried out using an air furnace. The mixed liquid was gradually heated from 30°C to 90°C over a period of 18 hours, and held at 90°C for 2 hours. After the end of the polymerization, the mold cavity was removed from the air furnace, and allowed to cool. Thereafter, the polymer was removed from the glass plate of the mold.

The photochromic properties of the resulting resin(thickness 2mm) are measured by the following methods. The results are shown in Table 1.

### (1) Colour-forming density

A mercury lamp SHL-100 supplied by Toshiba Kabushiki Kaisha was irradiated on the photochromic resin at 25°C ± 1°C for 60 seconds over a distance of 10 cm to colour the resin. A value of ε (60 seconds) - ε(0 second) was determined, and referred to as the colour-forming density. In the formula, ε (60 seconds) is the absorbance of the photochromic resin after light irradiation of 60 seconds under the above conditions at a maximum absorption wavelength, and ε (0second) is the absorbance of a non-irradiated resin at a maximum absorption wavelength during light irradiation.

### (2) Colour-fading speed

In the measurement of a colour-forming density, light was irradiated for 60 seconds, and then the irradiation was stopped. The time (seconds) taken for the absorbance of the photochromic resin to decrease to 1/2 of ε (60 seconds) - ε (0 second) was measured.

### (3) Durability

A fatigue life was measured by Xenon Fade-Ometer FAC-25AX-HC supplied by Suma Tester Co., Ltd. The fatigue life (T_{1/2}) is the time taken for the absorbance at a maximum absorption wavelength based on the photochromic compound to decrease to 1/2 of the initial (T₀) absorbance. Absorbances of T₀ and T_{1/2} are values obtained by substracting the absorbance of a non-irradiated resin at a maximum absorption wavelength.

### (4) Percent transmission of light

Percent transmission of light at 500 nm was measured using a spectrophotometer 220A supplied by Hitachi Limited.

### (5) Surface hardness

The L-scale value of a test piece having a thickness of 2 mm was measured using a Rockwell hardness tester.

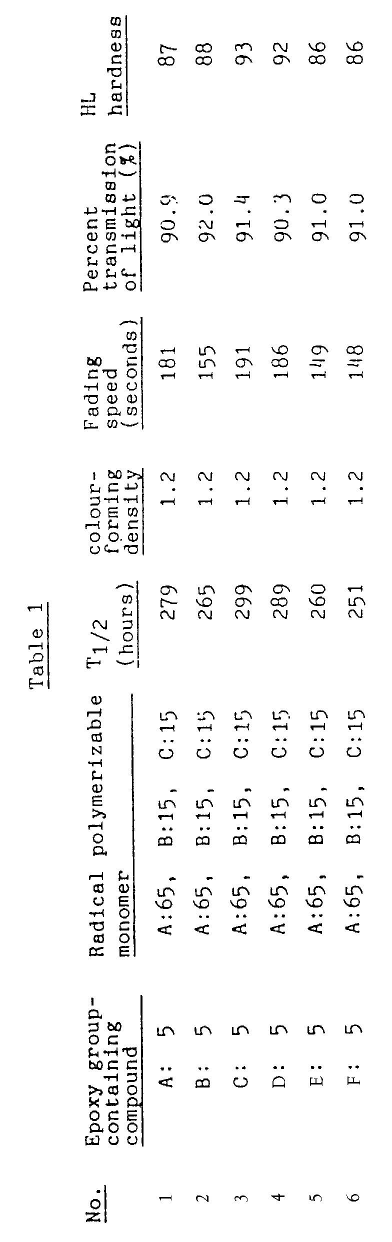

### Comparative Example 1

The preceeding Example was repeated except that a compound having at least one epoxy group in the molecule was not used. Furthermore 0.5 parts by weight of the fulgide compounds shown in Table 2 were used. The results are shown in Table 2.

**Table 2**

| No. | Fulgide compound | Radical-polymerizable monomer | | | T_{1/2} (hours) |
|---|---|---|---|---|---|
| 1 | A | A:80, | B:15, | C: 4 | 130 |
| 2 | A | A:50, | B:19, | D:30 | 132 |
| 3 | B | A:80, | B:15, | C: 4 | 106 |
| 4 | B | A:50, | B:19, | D:30 | 117 |
| 5 | C | A:80, | B:15, | C: 4 | 140 |

## Claims

1. A photochromic composition comprising:
(A) 100 parts by weight of a compound having at least one epoxy group per molecule of formula (1);
(B) 0.0001 to 10,000 parts by weight of a photochromic compound comprising a fulgide compound of formula (2);
(C) 1 to 99,999 parts by weight of a monomer of formula (3); and
(D) 1 to 99,999 parts by weight of a monomer of formula (4);
the total amount of (C) and (D) being from 10 to 100,000 parts by weight;
the compounds of formulae (1) to (4) being defined as follows: 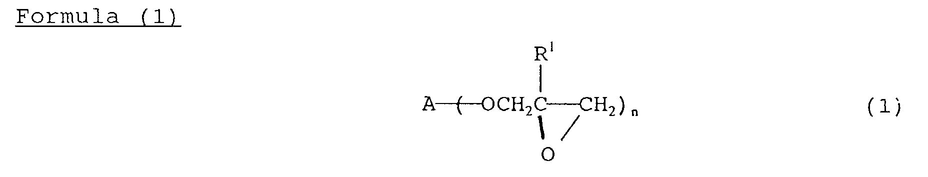 wherein:
R¹ is hydrogen or a methyl group;
n is 1 or 2; and
when n is 1, A is an alkyl group having 2 to 20 carbon atoms which may be unsubstituted or substituted by a hydroxyl group, a group of formula -R(̵OR 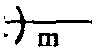 OH (in which R is an alkylene group having 2 to 4 carbon atoms and m is an integer of 1 to 20), a cycloalkyl group having 6 or 7 carbon atoms which may be unsubstituted or substituted by a hydroxyl group, a phenyl group which may be unsubstituted or substituted by a hydroxyl group, or a benzoyl group which may be unsubstituted or substituted by a carboxyl group; or
when n is 2, A is an alkylene group having 2 to 20 carbon atoms which may be unsubstituted or substituted by a hydroxyl group, a group of formula -R(̵OR 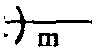 (in which R is an alkylene group having 2 to 4 carbon atoms and m is an integer of 1 to 20), a cycloalkylene group which may be unsubstituted or substituted by a hydroxyl group, a phenylene group which may be unsubstituted or substituted by a hydroxyl group, a phthaloyl group, an isophthaloyl group, a terephthaloyl group or a group of formula: 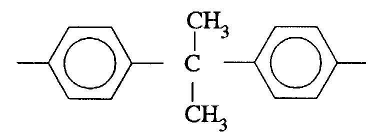 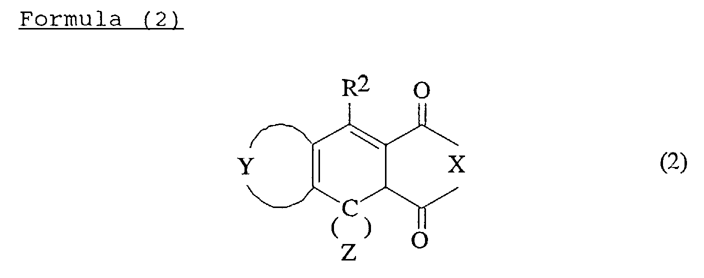
wherein 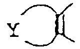 is a benzene ring or a divalent aromatic hydrocarbon group consisting of 2 or 3 fused benzene rings or a divalent unsaturated heterocyclic group comprising a 5- or 7-membered ring including 1 or 2 oxygen, nitrogen or sulphur atoms in the ring and optionally containing a fused benzene ring; any of which may have a substituent selected from halogen atoms, alkyl groups having 1 to 4 carbon atoms, alkoxy groups having 1 to 4 carbon atoms, aryl groups having 6 to 10 carbon atoms, alkoxyaryl groups having 7 to 14 carbon atoms (aryl groups having 6 to 10 carbon atoms substituted by alkoxy groups having 1 to 4 carbon atoms), an amino group, nitro group or cyano group;
R² is an alkyl group having 1 to 4 carbon atoms, an aryl group having 6 to 10 carbon atoms, or a monovalent heterocyclic group comprising a 5 to 7 membered ring including 1 or 2 oxygen atoms, nitrogen atoms or sulphur atoms as ring members and optionally containing a fused benzene ring; 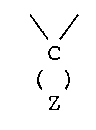 is a norbornylidene group or an adamantylidene group; and
X is an oxygen atom, a group 〉N-R³, a group 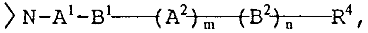 a group 〉N-A³-A⁴ or a group 〉N-A³-R⁵ in which R³ is a hydrogen atom, an alkyl group having 1 to 4 carbon atoms or an aryl group having 6 to 10 carbon atoms, A¹, A² or A³, which are the same or different, are each an alkylene group having 1 to 4 carbon atoms, an alkylidene group having 2 to 4 carbon atoms, a cycloalkylene group or a dimethyl-cyclohexane-diyl group, B¹ and B², which are the same or different, are each -O-, 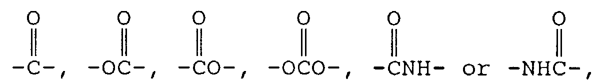 and m and n are independently 0 or 1, with the proviso that when m is 0, n is 0, R⁴ is an alkyl group having 1 to 4 carbon atoms, a naphthyl group or a naphthylalkyl group having 11 to 14 carbon atoms, A⁴ is a naphthyl group, and R⁵ is a halogen atom, a cyano group or a nitro group; 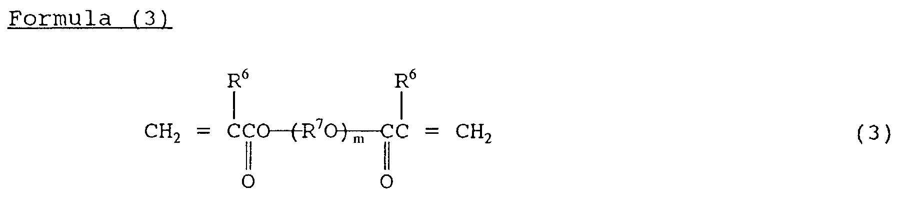 wherein:
R⁶ is hydrogen or a methyl group;
R⁷ is an alkylene group having 1 to 4 carbon atoms, or a group of formula 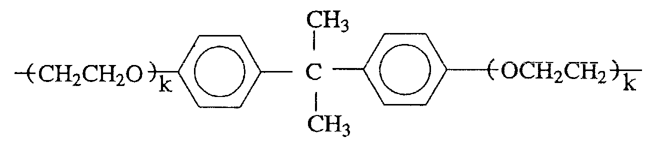
in which k is 0 or 1; and
m is an integer of 2 to 20; 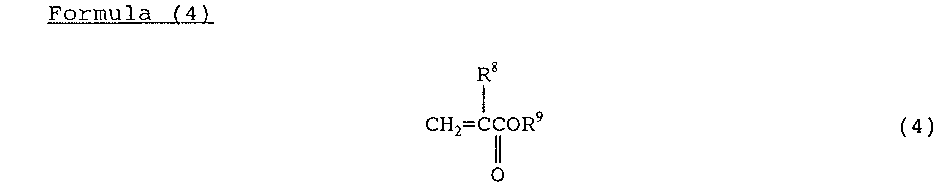
wherein:
R⁸ is hydrogen or a methyl group; and
R⁹ is an alkyl group having 1 to 4 carbon atoms which may be unsubstituted or substituted by a hydroxyl group, an aryl group containing 6 to 10 carbon atoms which may be unsubstituted or substituted by a halogen atom, or an aralkyl group containing 7 to 10 carbon atoms which may be unsubstituted or substituted by a halogen atom.

2. A composition according to claim 1 wherein, in formula (2), 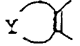 is a heterocyclic group optionally substituted by aryl of 6 to 10 carbon atoms or alkoxyaryl of 7 to 14 carbon atoms, R² is alkyl of 1 to 4 carbon atoms, 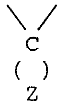 is an adamantylidene group, and X is 〉N-R in which R is cyanoalkyl having 1 to 4 carbon atoms, nitroalkyl having 1 to 4 carbon atoms or alkoxycarbonylalkyl having 3 to 9 carbon atoms.

3. A composition according to claim 1 or 2 wherein the photochromic component (B) is composed of a combination of the photochromic compound of formula (2) and a photochromic compound having a chromene structure.

4. A composition according to claim 3 wherein the photochromic compound having a chromene structure has the formula (5): 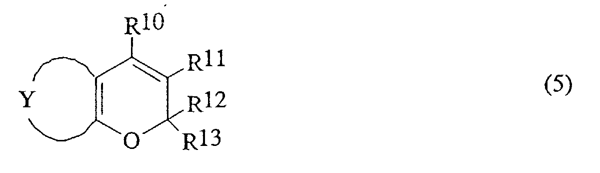 wherein R¹⁰, R¹¹, R¹² and R¹³ are the same or different and each is hydrogen, alkyl, aryl, substituted amino or a saturated heterocyclic group or R¹⁰ and R¹¹ are as defined above and R¹² and R¹³ together with the carbon atom to which they are bound form a ring, and the 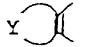 group is an aromatic hydrocarbon group or an unsaturated heterocyclic group optionally substituted by alkyl of 1 to 20 carbon atoms and/or alkoxy of 1 to 20 carbon atoms.

5. A composition according to claim 4 wherein R¹⁰ and R¹¹ are both hydrogen, R¹² and R¹³ are the same or different and each is alkyl of 1 to 4 carbon atoms or together with the carbon atom to which they are bound form a bicyclo(3,3,1)9-nonylidene group or a norbornylidene group, and 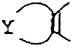 is a naphthalene ring optionally substituted by alkyl of 1 to 20 carbon atoms and/or alkoxy of 1 to 20 carbon atoms.

6. A composition according to any one of claims 1 to 5 which comprises 0.1 to 1,000 parts by weight of the photochromic component.

7. A composition according to any one of claims 1 to 6 which further comprises either or both of: (a) 0.01 to 10,000 parts by weight of an ultraviolet stabilizer; and (b) 0.01 to 10,000 parts by weight of a phosphite ester compound.

8. A composition according to claim 7 wherein the ultraviolet stabilizer is a hindered amine photostabilizer.

9. A lens comprising a photochromic composition obtainable by radical initiated polymerization of a composition according to any one of the preceding claims.

## Patentansprüche

1. Photochrome Zusammensetzung umfassend:
(A) 100 Gewichtsteile einer Verbindung mit mindestens einer Epoxygruppe pro Molekül der Formel (1);
(B) 0,0001 bis 10000 Gewichtsteile einer photochromen Verbindung umfassend ein Fulgid der Formel (2);
(C) 1 bis 99999 Gewichtsteile eines Monomers der Formel (3); und
(D) 1 bis 99999 Gewichtsteile eines Monomers der Formel (4);
wobei die Gesamtmenge an (C) und (D) 10 bis 100000 Gewichtsteile beträgt;
die Verbindungen der Formeln (1) bis (4) wie folgt definiert sind: 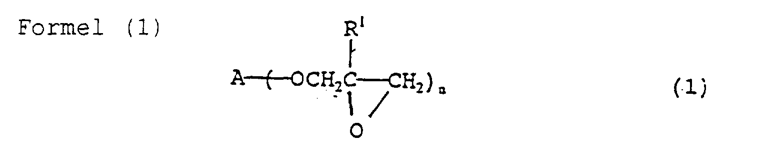 worin:
R¹ Wasserstoff oder eine Methylgruppe ist;
n 1 oder 2 ist; und
wenn n 1 ist, A eine Alkylgruppe mit 2 bis 20 Kohlenstoffatomen ist, die unsubstituiert oder durch eine Hydroxygruppe substituiert sein kann, eine Gruppe der Formel -R-(OR)ₘ-OH (worin R eine Alkylengruppe mit 2 bis 4 Kohlenstoffatomen und m eine ganze Zahl von 1 bis 20 ist), eine Cycloalkylgruppe mit 6 oder 7 Kohlenstoffatomen, die unsubstituiert oder durch eine Hydroxygruppe substituiert sein kann, eine Phenylgruppe, die unsubstituiert oder durch eine Hydroxygruppe substituiert sein kann, oder eine Benzoylgruppe, die unsubstituiert oder durch eine Carboxylgruppe substituiert sein kann; oder
wenn n 2 ist, A eine Alkylengruppe mit 2 bis 20 Kohlenstoffatomen ist, die unsubstituiert oder durch eine Hydroxygruppe substituiert sein kann, eine Gruppe der Formel -R-(OR)ₘ- (worin R eine Alkylengruppe mit 2 bis 4 Kohlenstoffatomen und m eine ganze Zahl von 1 bis 20 ist), eine Cycloalkylengruppe, die unsubstituiert oder durch eine Hydroxygruppe substituiert sein kann, eine Phenylengruppe, die unsubstituiert oder durch eine Hydroxygruppe substituiert sein kann, eine Phthaloylgruppe, eine Isophthaloylgruppe, eine Terephthaloylgruppe oder eine Gruppe der Formel: 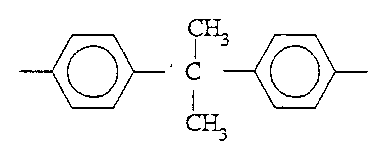 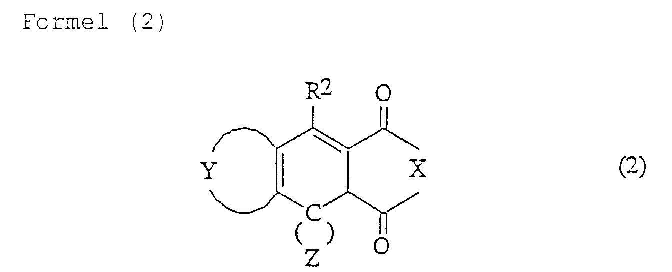
worin 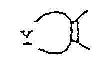 ein Benzolring ist oder eine zweiwertige aromatische Kohlenwasserstoffgruppe aus 2 oder 3 kondensierten Benzolringen oder eine zweiwertige ungesättigte heterocyclische Gruppe, die einen 5- oder 7-gliedrigen Ring, der ein oder zwei Sauerstoff-, Stickstoff- oder Schwefelatome im Ring enthält, und gegebenenfalls einen kondensierten Benzolring enthält, umfaßt, wobei jede Komponente einen Substituenten aufweisen kann, ausgewählt aus Halogenatomen, Alkylgruppen mit 1 bis 4 Kohlenstoffatomen, Alkoxygruppen mit 1 bis 4 Kohlenstoffatomen, Arylgruppen mit 6 bis 10 Kohlenstoffatomen, Alkoxyarylgruppen mit 7 bis 14 Kohlenstoffatomen (Arylgruppen mit 6 bis 10 Kohlenstoffatomen, die durch Alkoxygruppen mit 1 bis 4 Kohlenstoffatomen substituiert sind), einer Aminogruppe, Nitrogruppe oder Cyangruppe;
R² eine Alkylgruppe mit 1 bis 4 Kohlenstoffatomen, eine Arylgruppe mit 6 bis 10 Kohlenstoffatomen oder eine einwertige heterocyclische Gruppe, die einen 5- bis 7-gliedrigen Ring, der 1 oder 2 Sauerstoffatome, Stickstoffatome oder Schwefelatome als Ringglieder und gegebenenfalls einen kondensierten Benzolring enthält, umfaßt, ist; 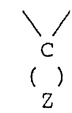 eine Norbornylidengruppe oder eine Adamantylidengruppe ist; und
X ein Sauerstoffatom, eine Gruppe >N-R³ , eine Gruppe 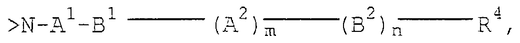 eine Gruppe >N-A³-A⁴ oder eine Gruppe >N-A³-R⁵ ist, worin R³ ein Wasserstoffatom, eine Alkylgruppe mit 1 bis 4 Kohlenstoffatomen oder eine Arylgruppe mit 6 bis 10 Kohlenstoffatomen ist, A¹, A² oder A³, die gleich oder verschieden sind, eine Alkylengruppe mit 1 bis 4 Kohlenstoffatomen, eine Alkylidengruppe mit 2 bis 4 Kohlenstoffatomen, eine Cycloalkylengruppe oder eine Dimethylcyclohexandiylgruppe sind, B¹ und B², die gleich oder verschieden sind, -O-, 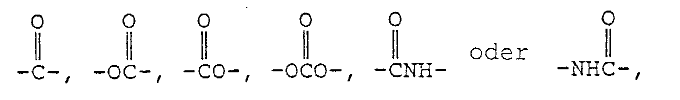 und m und n unabhängig voneinander 0 oder 1 sind, mit der Maßgabe, daß, wenn m 0 ist, n 0 ist, R⁴ eine Alkylgruppe mit 1 bis 4 Kohlenstoffatomen, eine Naphthylgruppe oder eine Naphthylalkylgruppe mit 11 bis 14 Kohlenstoffatomen ist, A⁴ eine Naphthylgruppe ist, und R⁵ ein Halogenatom, eine Cyangruppe oder eine Nitrogruppe ist; 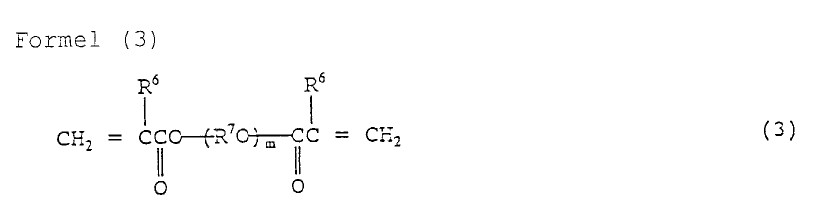 worin
R⁶ Wasserstoff oder eine Methylgruppe ist;
R⁷ eine Alkylengruppe mit 1 bis 4 Kohlenstoffatomen ist, oder eine Gruppe der Formel 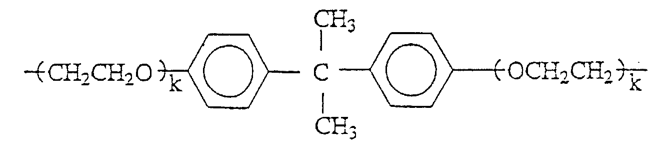
worin k 0 oder 1 ist; und m eine ganze Zahl von 2 bis 20 ist; 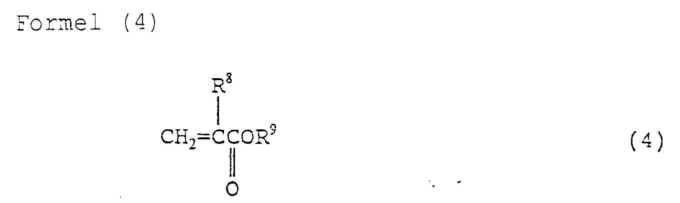 worin:
R⁸ Wasserstoff oder eine Methylgruppe ist; und
R⁹ eine Alkylgruppe mit 1 bis 4 Kohlenstoffatomen, die unsubstituiert oder durch eine Hydroxygruppe substituiert sein kann, eine Arylgruppe mit 6 bis 10 Kohlenstoffatomen, die unsubstituiert oder durch ein Halogenatom substituiert sein kann, oder eine Aralkylgruppe mit 7 bis 10 Kohlenstoffatomen, die unsubstituiert oder durch ein Halogenatom substituiert sein kann, ist.

2. Zusammensetzung nach Anspruch 1, dadurch gekennzeichnet, daß in Formel (2), 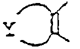 eine gegebenenfalls durch Aryl mit 6 bis 10 Kohlenstoffatomen oder Alkoxyaryl mit 7 bis 14 Kohlenstoffatomen substituierte heterocyclische Gruppe ist, R² Alkyl mit 1 bis 4 Kohlenstoffatomen ist, 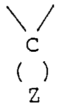 eine Adamantylidengruppe ist, und X 〉N-R ist, worin R Cyanoalkyl mit 1 bis 4 Kohlenstoffatomen, Nitroalkyl mit 1 bis 4 Kohlenstoffatomen oder Alkoxycarbonylalkyl mit 3 bis 9 Kohlenstoffatomen ist.

3. Zusammensetzung nach Anspruch 1 oder 2, dadurch gekennzeichnet, daß die photochrome Komponente (B) aus einer Kombination einer photochromen Verbindung der Formel (2) und einer photochromen Verbindung mit einer Chromenstruktur zusammengesetzt ist.

4. Zusammensetzung nach Anspruch 3, dadurch gekennzeichnet, daß die photochrome Verbindung mit einer Chromenstruktur die Formel (5) besitzt: 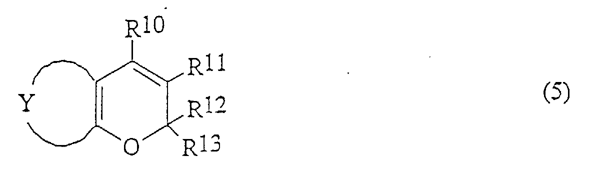 worin R¹⁰, R¹¹, R¹² und R¹³ gleich oder verschieden sind und Wasserstoff, Alkyl, Aryl, substituiertes Amino oder eine gesättigte heterocyclische Gruppe bedeuten, oder R¹⁰ und R¹¹ die vorstehend angegebene Bedeutung besitzen und R¹² und R¹³ zusammen mit dem Kohlenstoffatom, an das sie gebunden sind, ein Ring bilden, und 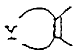 eine aromatische Kohlenwasserstoffgruppe oder eine ungesättigte heterocyclische Gruppe, die gegebenenfalls durch Alkyl mit 1 bis 20 Kohlenstoffatomen und/oder Alkoxy mit 1 bis 20 Kohlenstoffatomen substituiert ist, ist.

5. Zusammensetzung nach Anspruch 4, dadurch gekennzeichnnet, daß R¹⁰ und R¹¹ beide Wasserstoff sind, R¹² und R¹³ gleich oder verschieden sind und Alkyl mit 1 bis 4 Kohlenstoffatomen bedeuten oder zusammen mit dem Kohlenstoffatom, an das sie gebunden sind, eine Bicyclo(3,3,1)9-nonylidengruppe oder eine Norbornylidengruppe bilden, und 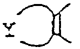 ein Naphthalinring ist, der gegebenenfalls durch Alkyl mit 1 bis 20 Kohlenstoffatomen und/oder Alkoxy mit 1 bis 20 Kohlenstoffatomen substituiert ist.

6. Zusammensetzung nach einem der Ansprüche 1 bis 5, dadurch gekennzeichnet, daß sie 0,1 bis 1000 Gewichtsteile der photochromen Komponente umfaßt.

7. Zusammensetzung nach einem der Ansprüche 1 bis 6, dadurch gekennzeichnet, daß sie außerdem einen oder beide der Bestandteile umfaßt:
(a) 0,01 bis 10000 Gewichtsteile eines Ultraviolett-Stabilisators; und
(b) 0,01 bis 10000 Gewichtsteile einer Phosphitester-Verbindung.

8. Zusammensetzung nach Anspruch 7, dadurch gekennzeichnet, daß der Ultraviolett-Stabilisator ein Photostabilisator auf Basis eines sterisch gehinderten Amins ist.

9. Linse umfassend eine photochrome Zusammensetzung, erhältlich durch radikalische Polymerisation einer Zusammensetzung nach einem der vorhergehenden Ansprüche.

## Revendications

1. Composition photochromique comprenant :
(A) 100 parties en poids d'un composé ayant au moins un groupe époxy par molécule de formule (1);
(B) 0,0001 à 10000 parties en poids d'un composé photochromique comprenant un composé de fulgide de formule (2);
(C) 1 à 99999 parties en poids d'un monomère de formule (3); et
(D) 1 à 99999 parties en poids d'un monomère de formule (4);
la quantité totale de (C) et (D) étant comprise entre 10 et 100000 parties en poids;
les composés répondant aux formules (1) à (4) étant définis comme suit : 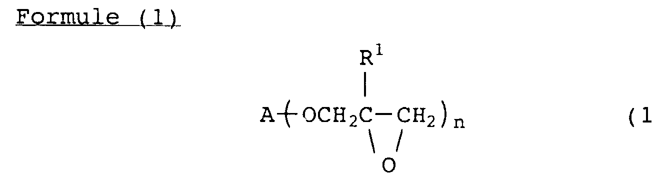 dans laquelle :
R¹ est un hydrogène ou un groupe méthyle;
n vaut 1 ou 2; et
lorsque n vaut 1, A est un groupe alkyle ayant 2 à 20 atomes de carbone qui peut être non substitué ou substitué par un groupe hydroxyle, un groupe de formule -R-(OR)ₘ-OH (dans laquelle R est un groupe alkylène ayant 2 à 4 atomes de carbone et m est un entier de 1 à 20), un groupe cycloalkyle ayant 6 ou 7 atomes de carbone qui peut être non substitué ou substitué par un groupe hydroxyle, un groupe phényle qui peut être non substitué ou substitué par un groupe hydroxyle, ou un groupe benzoyle qui peut être non substitué ou substitué par un groupe carboxyle; ou
lorsque n vaut 2, A est un groupe alkylène ayant 2 à 20 atomes de carbone qui peut être non substitué ou substitué par un groupe hydroxyle, un groupe de formule -R-(OR)ₘ- (dans laquelle R est un groupe alkylène ayant 2 à 4 atomes de carbone et m est un entier de 1 à 20), un groupe cycloalkylène qui peut être non substitué ou substitué par un groupe hydroxyle, un groupe phénylène qui peut être non substitué ou substitué par un groupe hydroxyle, un groupe phtaloyle, un groupe isophtaloyle, un groupe téréphtaloyle ou un groupe de formule : 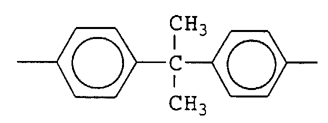 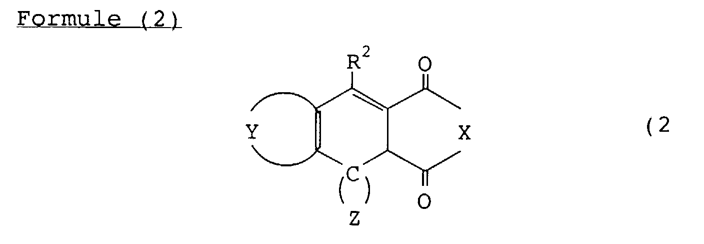
dans laquelle 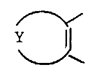 est un noyau benzénique ou un groupe hydrocarboné aromatique divalent constitué de 2 ou 3 noyaux benzéniques condensés ou un groupe hétérocyclique insaturé divalent comprenant un cycle à 5 ou 7 chaînons contenant 1 ou 2 atomes d'oxygène, d'azote ou de soufre dans le cycle et contenant éventuellement un noyau benzénique condensé; chacun d'eux pouvant porter un substituant choisi parmi les atomes d'halogène, les groupes alkyles ayant 1 à 4 atomes de carbone, les groupes alcoxy ayant 1 à 4 atomes de carbone, les groupes aryles ayant 6 à 10 atomes de carbone, les groupes alcoxyaryles ayant 7 à 14 atomes de carbone (groupes aryles ayant 6 à 10 atomes de carbone substitués par des groupes alcoxy ayant 1 à 4 atomes de carbone), un groupe amino, un groupe nitro ou un groupe cyano;
R² est un groupe alkyle ayant 1 à 4 atomes de carbone, un groupe aryle ayant 6 à 10 atomes de carbone, ou un groupe hétérocyclique monovalent comprenant un cycle à 5 ou 7 chaînons contenant 1 ou 2 atomes d'oxygène, d'azote ou de soufre en tant que chaînons du cycle et contenant éventuellement un noyau benzénique condensé; 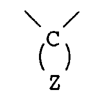 est un groupe norbornylidène ou un groupe adamantylidène; et
X est un atome d'oxygène, un groupe >N-R³, un groupe >N-A¹-B¹-(A²)ₘ-(B²)ₙ-R⁴, un groupe >N-A³-A⁴ ou un groupe >N-A³-R⁵ où R³ est un atome d'hydrogène, un groupe alkyle ayant 1 à 4 atomes de carbone ou un groupe aryle ayant 6 à 10 atomes de carbone, A¹, A² ou A³, qui sont identiques ou différents, représentent chacun un groupe alkylène ayant 1 à 4 atomes de carbone, un groupe alkylidène ayant 2 à 4 atomes de carbone, un groupe cycloalkylène ou un groupe diméthyl-cyclohexane-diyle, B¹ et B², qui sont identiques ou différents, représentent chacun -O-, 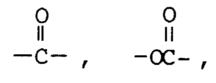 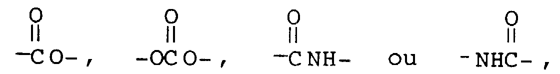 et m et n valent indépendamment 0 ou 1, avec la clause conditionnelle que lorsque m vaut 0, n est égal à 0, R⁴ est un groupe alkyle ayant 1 à 4 atomes de carbone, un groupe naphtyle ou un groupe naphtylalkyle ayant 11 à 14 atomes de carbone, A⁴ est un groupe naphtyle, et R⁵ est un atome d'halogène, un groupe cyano ou un groupe nitro; 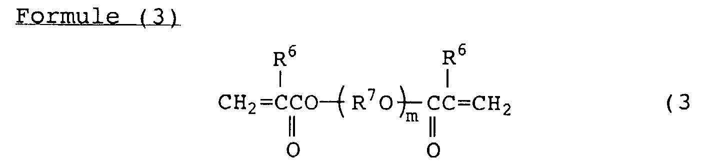 dans laquelle :
R⁶ est un hydrogène ou un groupe méthyle;
R⁷ est un groupe alkylène ayant 1 à 4 atomes de carbone, ou un groupe de formule 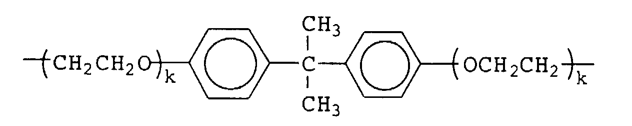
dans laquelle k vaut 0 ou 1; et
m est un entier de 2 à 20; 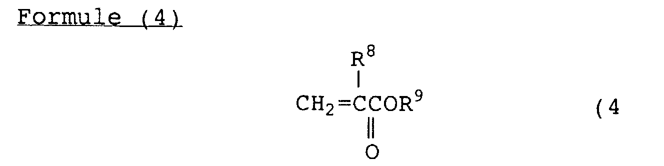 dans laquelle :
R⁸ est un hydrogène ou un groupe méthyle; et
R⁹ est un groupe alkyle ayant 1 à 4 atomes de carbone qui peut être non substitué ou substitué par un groupe hydroxyle, un groupe aryle contenant 6 à 10 atomes de carbone qui peut être non substitué ou substitué par un atome d'halogène, ou un groupe aralkyle contenant 7 à 10 atomes de carbone qui peut être non substitué ou substitué par un atome d'halogène.

2. Composition selon la revendication 1 dans laquelle, dans la formule (2), 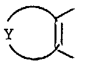 est un groupe hétérocyclique éventuellement substitué par un aryle de 6 à 10 atomes de carbone ou un alcoxyaryle de 7 à 14 atomes de carbone, R² est un groupe alkyle de 1 à 4 atomes de carbone, 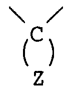 est un groupe adamantylidène, et X est >N-R où R est un groupe cyanoalkyle ayant 1 à 4 atomes de carbone, un groupe nitroalkyle ayant 1 à 4 atomes de carbone ou un groupe alcoxycarbonylalkyle ayant 3 à 9 atomes de carbone.

3. Composition selon la revendication 1 ou 2 dans laquelle le composant photochromique (B) est constitué d'une combinaison du composé photochromique de formule (2) et d'un composé photochromique ayant une structure de chromène.

4. Composition selon la revendication 3 dans laquelle le composé photochromique ayant une structure de chromène répond à la formule (5) : 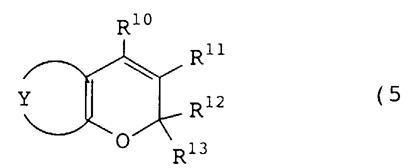 dans laquelle R¹⁰, R¹¹, R¹² et R¹³ sont identiques ou différents et chacun est un hydrogène, un alkyle, un aryle, un amino substitué, ou un groupe hétérocyclique saturé, ou encore R¹⁰ et R¹¹ sont tels que définis ci-dessus et R¹² et R¹³ forment un cycle avec l'atome de carbone auquel ils sont liés, et le groupe 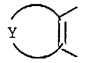 est un groupe hydrocarboné aromatique ou un groupe hétérocyclique insaturé éventuellement substitué par un alkyle de 1 à 20 atomes de carbone et/ou un alcoxy de 1 à 20 atomes de carbone.

5. Composition selon la revendication 4 dans laquelle R¹⁰ et R¹¹ sont tous deux un hydrogène, R¹² et R¹³ sont identiques ou différents et chacun représente un alkyle de 1 à 4 atomes de carbone ou forment avec l'atome de carbone auquel ils sont liés un groupe bicyclo(3,3,1)9-nonylidène ou un groupe norbornylidène, et 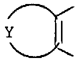 est un noyau naphtalène éventuellement substitué par un alkyle de 1 à 20 atomes de carbone et/ou un alcoxy de 1 à 20 atomes de carbone.

6. Composition selon l'une quelconque des revendications 1 à 5 qui comprend 0,1 à 1000 parties en poids du composant photochromique.

7. Composition selon l'une quelconque des revendications 1 à 6 qui comprend en outre l'un ou l'autre ou bien les deux parmi :
(a) 0,01 à 10000 parties en poids d'un stabilisant ultraviolet ; et
(b) 0,01 à 10000 parties en poids d'un composé ester de phosphite.

8. Composition selon la revendication 7 dans laquelle le stabilisant ultraviolet est un photostabilisant de type amine encombrée.

9. Lentille comprenant une composition photochromique pouvant être obtenue par une polymérisation à initiation radicalaire d'une composition selon l'une quelconque des revendications précédentes.
